# EUROPEAN PATENT SPECIFICATION

(11) **EP 1 110 790 B1**
(45) Date of publication and mention of the grant of the patent: **07.05.2003**
(21) Application number: 99830772.2
(22) Date of filing: 13.12.1999
(51) Int. Cl.: B60K 17/04, B60T 1/06

(54) **A reduction gear unit with built-in brake for industrial vehicles**
Untersetzunggetriebe mit eingebauter Bremse für Nutzfahrzeuuge
Réducteur avec frein intégré pour véhicules utilitaires

(43) Date of publication of application: 27.06.2001
(73) Proprietor: Sampingranaggi S.r.l., 40050 Villanova di Castenaso (Bologna) (IT)
(72) Inventor: Marchioni, Romolo, 40122 Bologna (IT); Marchioni, Francesco, 40122 Bologna (IT)
(74) Representative: Lanzoni, Luciano

(56) References cited:
- DE-A- 19 633 071
- DE-C- 4 321 699
- US-A- 5 147 255

## Description

The present invention relates to a reduction gear unit with built-in brake for industrial vehicles, especially forklift trucks.

A reduction gear unit of this type is described in United States patent US-5 174 255. That patent discloses a reduction gear unit comprising a first reduction unit consisting of a cylindrical gear wheel pair and a second planetary gear unit, also consisting of cylindrical gear wheels.

Between the first cylindrical gear wheel pair and the planetary gear unit, there is a multiple disc brake that works in an oil bath. Having the brake built into the reduction gear unit makes it possible to reduce the overall dimensions of the brake and reduction gear assembly compared to an assembly with an external brake. In addition, multiple disc brakes in oil bath are well suited to the speed range of forklift trucks and are very durable.

In reduction gear units of this kind, however, operation of the brake is quite complicated because the brake is located after the cylindrical gear wheels forming the first reduction gear unit. In the aforementioned patent US-5 147 255, the brake actuator operates directly on the cylindrical gear wheel adjacent to the brake, the cylindrical gear wheel itself and the sun gear of the planetary reduction gear train being shifted further along the axis. The gears must therefore have straight teeth and have mobile and, hence, less rigid supports and may be noisy. Moreover, since the brake is located in the middle of the reduction gearbox, it is difficult to cool.

In German patent application DE-196 33 071, which discloses a reduction gear unit of the same type and according to the preamble of claim 1, the multiple disc brake is located adjacent to the wall of the reduction gear box before the cylindrical gear wheel of the first reduction gear unit.

The brake is supported by a first grooved ring passing through the brake discs and fixed to the wall of the reduction gear box. The wall of the reduction gear box also bears the load of the brake. The brake is actuated by a second compression ring with pins that pass through the first ring. The structure of the brake is quite complex and expensive to make.

In this case too, the brake may have cooling problems because it is closed between two other parts of the reduction unit and the oil that should cool it does not circulate easily in the brake.

The aim of the present invention is to provide an improved reduction gear unit with built-in brake that is simple in construction and economical to make.

Another aim of the invention is to provide an effective way of cooling the brake without using additional devices or parts that require special machining processes.

According to one aspect, the present invention provides a reduction gear unit with built-in brake as described in claim 1. According to the present invention, the disc brake built into the reduction gear unit is pressed axially and develops its braking action onto one of the gear wheels of the first reduction gear unit, and between the gear wheel itself and the brake actuating system, the gear wheel having the function of opposing the brake thrust.

Thus, the operation of the brake is simpler than in prior art and also enables the oil to circulate better around the brake, thus improving its cooling effect on the brake. In addition, since the brake is close to the reduction gear box, heat exchange with the outside is more effective.

The dependent claims refer to preferred and advantageous embodiments of the invention.

The invention will now be described with reference to the accompanying drawings which illustrate preferred embodiments of it and in which:
- Figure 1 is a cross section of the complete reduction gear unit forming the subject-matter of the present invention;
- Figure 2 is a partial side view of the reduction gear unit shown in Figure 1;
- Figure 3 is a detail of the reduction gear unit shown in Figure 1;
- Figure 4 is a partial side view of another embodiment of the reduction gear unit shown in Figure 1;
- Figure 5 is a detail of the embodiment of the reduction gear unit illustrated in Figure 4.

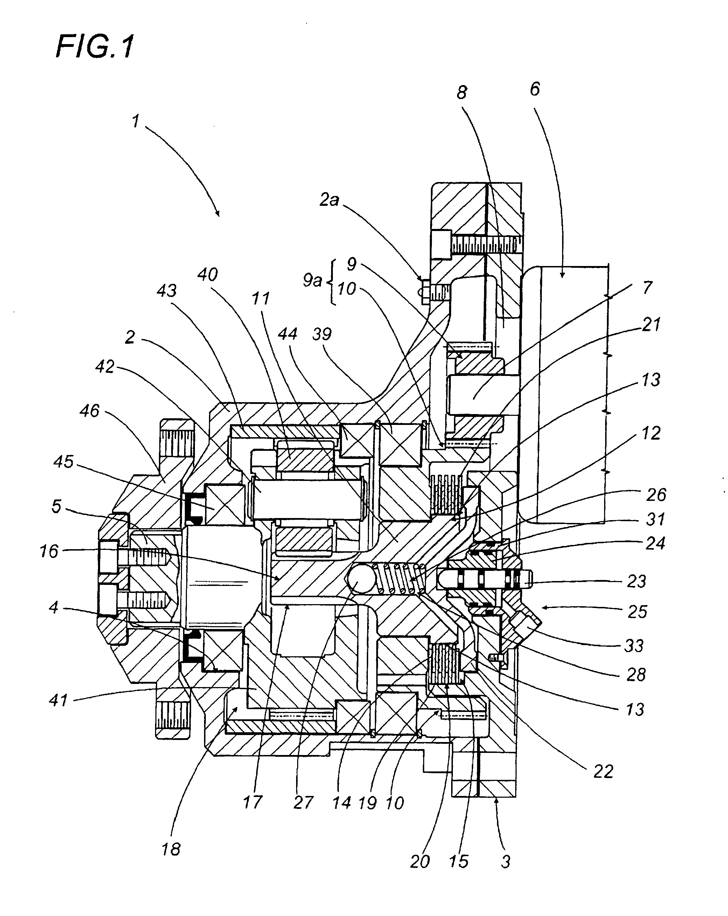

With reference to the accompanying drawings, the reduction gear unit labelled 1 as a whole in Figure 1, comprises a substantially cylindrical box 2 closed by a substantially flat cover 3. The box 2 is designed to be fitted inside the rim of a drive wheel (not illustrated) of an industrial vehicle on which the reduction gear units forming the subject-matter of the present invention are mounted.

As shown in Figure 1, the box 2 has a hole 4, on the side opposite the cover 3, through which the shaft 5 that transmits drive to the vehicle wheel passes.

The box 2 also has a breather cap 2a located at the top of it when the reduction gear unit is mounted on the vehicle.

At the top of the cover 3, there is a coupling designed to permit connection to a drive unit 6, for example, an electric meter. The drive unit 6 comprises a drive shaft that passes through the hole 8 and is coupled by known means (not illustrated), for example a key or grooved profile, to a first cylindrical gear wheel 9 forming part of a first reduction gear unit 9a. From the gear wheel 9, drive is transmitted to a second cylindrical gear wheel 10 that is larger in diameter than wheel 9, thus achieving a first reduction in speed. A multiple disc brake 15 is connected to the gear wheel 9 and is adjacent to the cover 3. The brake 15 comprises first discs 14 and second discs 21.

The gear wheel 10 is coupled to a shaft 11 by known means (not illustrated) . For example, it may be coupled by an interference fit or through a grooved profile. At a first end 12 of it, the shaft 11 has a cylindrical surface with a profile 13 designed to be slidably coupled with the first discs 14 of the multiple disc brake 15. A second end 16 of the shaft 11 is integral with a gear wheel 17 that acts as the sun gear of a second planetary reduction gear unit 18.

In another preferred embodiment (not illustrated), the gear wheel 17 may be separate and coupled to the end 16 of the shaft 11.

The cover 3 has a seat 19, usually with cylindrical sectors, whose surface has a profile 20 designed to be slidably coupled to the second discs 21 of the brake 15.

The first discs 14 of the brake 15 are slidably fitted in an axial direction to the shaft 11 and rotate with the latter, while the second discs 21 are slidably fitted in an axial direction to the cover 3 and are therefore fixed. The first and second discs 14 and 21 of the brake 15 are broadly in the shape of a circular crown whose profile is designed to permit the axial sliding fit. In the embodiment illustrated in Figure 1, the first discs 14 are coupled to the inside of the shaft 11, while the second discs 21 are coupled to the outside of the seat 19 in the cover 3. Obviously, without changing the operation of the brake 15, the first and second discs 14 and 21 could be made in such a way as to be coupled the other way round, that is to say, the first discs 14 on the outside and the second discs 21 on the inside.

The actuator of brake 15 comprises a compression ring 22, a thrust rod 23, and a piston 24 of a fluid-driven actuator 25. The thrust rod 23 and the piston 24 act separately in conjunction with the ring 22, while a return spring 26 and a thrust ball 27, both housed in a seat 28 of the shaft 11, act in combination to return the ring 22.

The thrust rod 23, by pressing axially on the ring 22, cause the first and second discs 14 and 21 to come into contact with each other and to apply the axial pressure on the gear wheel 10 so as to provide the braking action.

The multiple disc brake 15 works as follows: the first discs 14 are coupled to the shaft 11 and rotate with the latter as the vehicle moves; the second discs 21, on the other hand, are coupled to the seat 19 in the cover 3 and are therefore fixed. When the brake 15 is idle, the first and second discs 14 and 21 are axially free and present a certain amount of axial play so that they are free to rotate in relation to the discs 21. When the brake 15 is applied, the brake compression ring 22 moves axially towards the discs 14 and 21, causing them to move axially closer to each other. As the discs 14 and 21 come into contact, the linings on them create an area of friction that stops the first discs 14 from rotating relative to the second discs 21. The resulting torque tends to brake the vehicle. Obviously, increasing the axial thrust of the ring 22 on the discs 14 and 21 proportionally increases the braking torque.

In the embodiment, illustrated, the piston 24 is coaxial with the thrust rod 23. Both are fitted with seals designed to prevent leaks of lubricating oil from the reduction gear unit 1 and of drive fluid from the piston 24 itself.

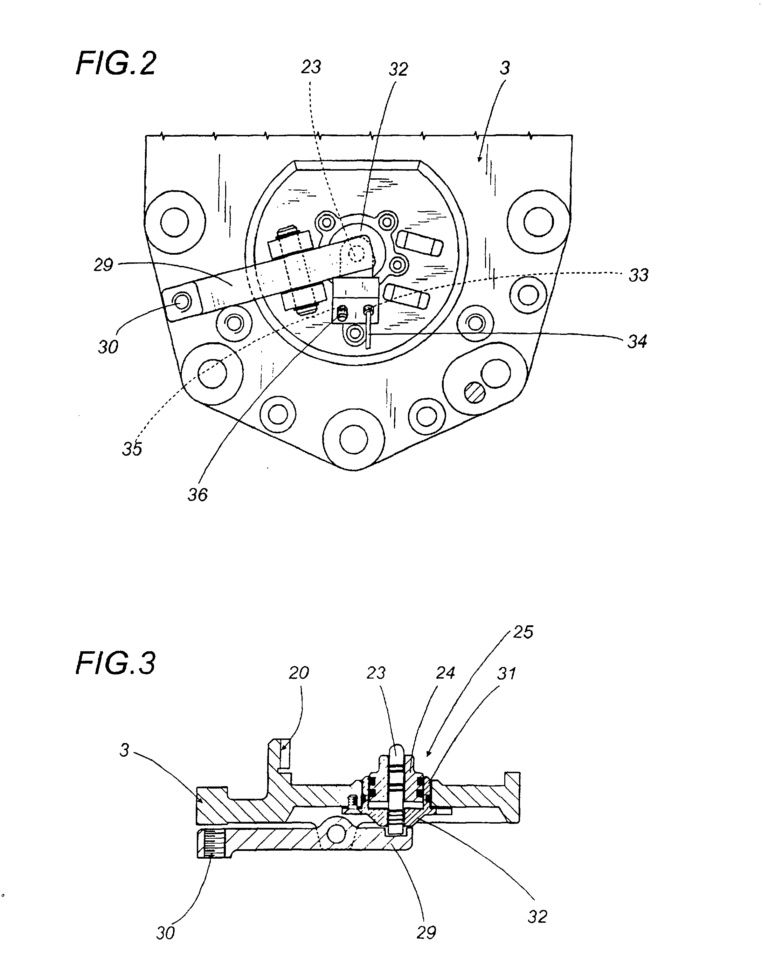

As shown in Figures 2 and 3, the thrust rod 23 acts in conjunction with a lever 29 to obtain a first mode of actuating the brake 15. This first actuating mode is mechanical, which means that the brake 15 is used as the parking brake of the vehicle. In figures 2 and 3, the lever 29 is a first class lever and comprises a fitting 30 designed to be attached to the internal wire of a Bowden cable (not illustrated). Other configurations (not illustrated) are also possible, for example, with a second class lever attached to and actuated by the casing of the Bowden cable and with the internal wire connected to a fixed point of the cover 3.

The actuator 25 and the piston 24 achieve a second mode of actuating the brake 15. The second actuating mode is fluid-driven. In this second mode, the brake 15 is used as a hydraulic service brake actuated by a pedal controlled pump (not illustrated).

The actuator 25 comprises a cylinder 31 within which the piston 24 slides. To facilitate maintenance, the cylinder 31 can be detached from the cover 3 to which it is fitted. The cylinder 31 comprises a closing wall 32 with a hole for connection to the fluid-drive control circuit 34 and a hole 35 for a bleed valve 36.

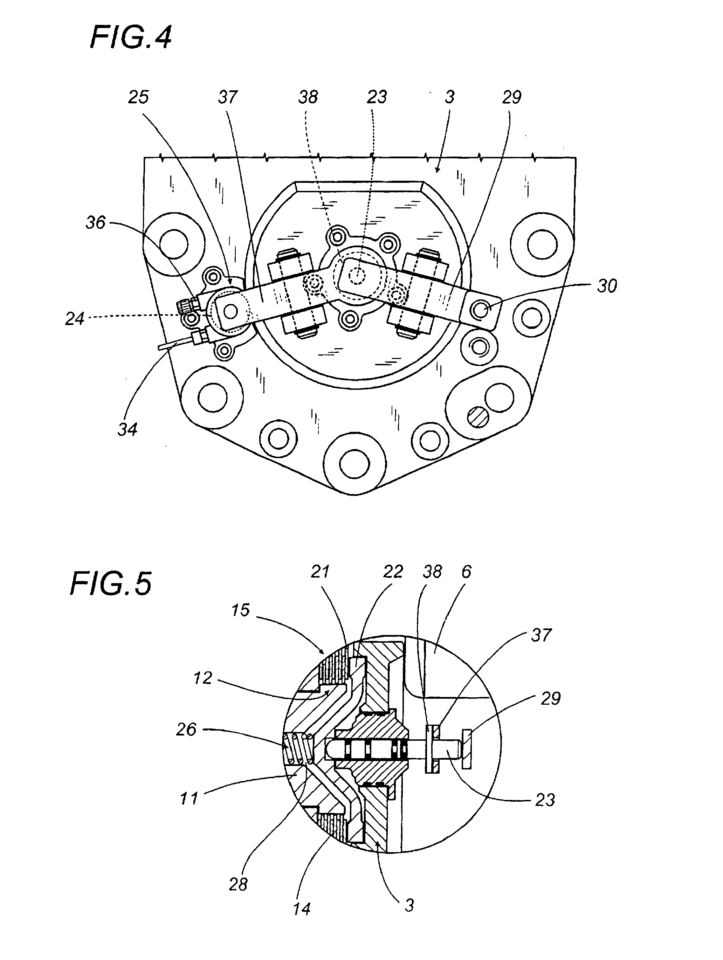

Figures 4 and 5 illustrate another embodiment of a fluid-driven control for the brake 15. In this embodiment, the actuator 25 is completely outside the reduction gear box, so that it is impossible for the brake fluid to mix with the lubricating oil of the reduction gear unit, for example, in the event of leakage from the piston 24. The piston 24 acts through a second lever 37 on the thrust rod 23 which therefore has an appropriate protrusion 38 on it.

As stated above, it should be noted that the axial thrust of the rod 23 or of the piston 24 is applied, through the discs of the brake 15, to the gear wheel 10. The gear wheel 10 develops an opposing force which provides sufficient friction to create the braking action. The gear wheel 10, in order to oppose the thrust force, is supported by a bearing 39 which is designed to bear not only the radial and axial forces resulting from the transmission of drive but also the axial forces applied to the gear wheel 10 as a result of the braking action. As shown in Figure 1, the inner ring of the bearing 10 is associated with the gear wheel 10 on the side opposite that where the brake 15 is located. Moreover, the outer ring of the bearing 39 is associated with the box 2 so as to transfer the axial thrust to it.

Looking again at the drive transmission system, the gear wheel 17 which is the sun gear of the second planetary reduction gear unit 18 transmits drive to a series of planet gears 40.

Normally, there are three planet gears 40 mounted on a support 41. In the embodiment illustrated in Figure 1, each planet gear 40 is rotatably mounted on a pin 42. Both ends of each pin 42 are supported by the planet gear support 41. Thus, the planet gears 40 have a rigid support which greatly reduces vibrations and noise.

In order to transmit drive, the planet gears 40 operate in conjunction with an internally toothed crown wheel 43. To simplify construction, the crown wheel 43 is located in the box 2 as a separate part. The crown wheel 43 may be fixed to the box 2 by an interference fit.

The planet gears 40, driven by the sun gear 17, rotate on the crown wheel 43 which cannot turn and which is also fixed in the axial direction. This causes the planet gear support 41 to rotate. The transmission shaft 5 is connected to the planet gear support 41 or is integral with it, as in the embodiment illustrated in Figure 1. Therefore, the rotational motion of the planet gear support 41 is transferred to the transmission shaft 5.

The assembly made up of the planet gear support 41 and the shaft 5 is supported by two bearings 44 and 45. In the embodiment illustrated, the bearing 45 is of the roller type to support the radial loads of the vehicle wheel, while the bearing 44 is of the ball type to also support axial loads.

Outside the box 2, the shaft 5 is connected to a hub 46 which is designed to be connected to the drive wheel of the vehicle.

It should be noted that even the gear wheels of the planetary reduction gear unit, if fitted with suitable supports to enable them to also bear axial loads, may have helical teeth in order to reduce vibrations and noise.

The reduction gear unit described above is simple and economical in construction. In particular, no teeth need to be cut directly on the inside of the box 2, since the crown wheel 43 is made as a separate part. The brake 15 is located in the reduction gear unit 1 in such a way that it cools easily. Lastly, using the gear wheel 10 to oppose the axial thrust of the brake has also made it possible to greatly simplify the brake actuating system.

### Key

- 1: reduction gear
- 2: box
- 2a: breather cap
- 3: cover
- 4: hole in box 2
- 5: transmission shaft
- 6: drive unit
- 7: drive shaft
- 8: hole in cover 3
- 9: first cylindrical gear wheel
- 9a: first reduction gear unit
- 10: second cylindrical gear wheel
- 11: shaft
- 12: first end of the shaft 11
- 13: profile of the end 12
- 14: first discs of the brake 15
- 15: multiple disc brake
- 16: second end of the shaft 11
- 17: sun gear of the planetary gear unit 18
- 18: second planetary reduction gear unit
- 19: seat in the cover 3
- 20: profile of the seat 19
- 21: second discs of the brake 15
- 22: brake 15 compression ring
- 23: thrust rod
- 24: piston of actuator 25
- 25: fluid-driven actuator
- 26: return spring
- 27: thrust ball
- 28: seat in the shaft 11
- 29: mechanical actuating lever
- 30: cable fitting
- 31: cylinder
- 32: wall of cylinder 31
- 33: connecting hole
- 34: fluid-drive control circuit
- 35: hole for valve 36
- 36: bleed valve
- 37: second lever
- 38: protrusion
- 39: bearing
- 40: planet gears
- 41: planet gear support
- 42: pin
- 43: crown wheel
- 44: bearings
- 45: bearings
- 46: hub

## Claims

1. A reduction gear unit with built-in brake for industrial vehicles, comprising a containing box (2, 3), a first reduction gear unit (9a) including a pair of cylindrical gear wheels (9, 10) placed one after the other, a second planetary reduction gear unit (18) including cylindrical gear wheels (17, 40, 43), a brake (15) with discs (14, 21) located between the containing box (2, 3) and the first drive reduction gear unit (9a), an actuating system (22, 23, 24, 26, 27) for the brake (15) and passing through the box (2, 3), the reduction gear unit being **characterized in that** the brake (15) with discs (14, 21) is pressed axially and develops its braking action onto one of the gear wheels (10) of the first reduction gear unit (9a), and between the gear wheel (10) itself and the brake (15) actuating system (22, 23, 24, 25, 26, 27), the gear wheel (10) having the function of opposing the brake thrust.

2. The reduction gear unit with built-in brake according to claim 1, **characterized in that** the brake actuating system (22, 23, 24, 25, 26, 27) comprises a thrust rod (23) and a compression ring (22) for a first actuating mode, the rod (23) passing through the box (2, 3) of the reduction gear unit (1) and being linked to the ring (22) and to a first control lever (29).

3. The reduction gear unit with built-in brake according to claim 2, **characterized in that** the brake actuating system (22, 23, 24, 25, 26, 27) comprises an actuator (25) for a second actuating mode, the actuator (25) including a piston (24) driven by a fluid under pressure and acting on the compression ring (22) and being separate from and in fluid contact with the rod (23) for the first actuating mode.

4. The reduction gear unit with built-in brake according to claim 3, **characterized in that** the reduction gear box comprises a cover (3) and **in that** the actuator (25) is located inside the cover (3) and the thrust rod (23) is coaxial with and passes through the piston (24) of the actuator (25).

5. The reduction gear unit with built-in brake according to claim 3, **characterized in that** the reduction gear box comprises a cover (3) and **in that** the actuator (25) is located outside the cover (3) and operates on the thrust rod (23) through a second lever (37).

6. The reduction gear unit with built-in brake according to any of the foregoing claims, **characterized in that** the gear wheel (10) is supported by a bearing (39) which is designed to bear not only the radial and axial forces applied to the gear wheel (10) as a result of the transmission of drive but also the axial forces applied to the gear wheel (10) resulting from the braking action.

7. The reduction gear unit with built-in brake according to claim 6, **characterized in that** the gear wheel (10) is supported by a bearing (39) located on the side opposite that where the brake (15) is located, the bearing (39) being connected with the box (2) in such a way as to transfer to the latter the axial forces applied to the gear wheel (10) as a result of the braking action of the brake (15).

8. The reduction gear unit with built-in brake according to any of the foregoing claims, **characterized in that** the first drive reduction gear unit (9a) comprises a pair of cylindrical gear wheels (9, 10) with helical teeth.

9. The reduction gear unit with built-in brake according to any of the foregoing claims, **characterized in that** the second planetary reduction gear unit (18) comprises a sun gear (17), planet gears (40) acting in conjunction with the sun gear (17) and an internally toothed crown wheel (43), the planet gears (40) being rotatably mounted on pins (42) which are in turn supported at both ends by a planet gear support (41), and the crown wheel (43) being fixed to the box (2).

10. The reduction gear unit with built-in brake according to claim 9, **characterized in that** the planet gear support (41) comprises a drive transmission shaft (5) for a vehicle drive wheel fitted with the reduction gear unit (1) and **in that** the assembly made up of the planet gear support (41) and the shaft (5) is supported by a first ball bearing (44) to support axial loads and by a second roller bearing (45) to support the radial loads of the wheel.

## Patentansprüche

1. Untersetzungsgetriebe mit eingebauter Bremse für Nutzfahrzeuge, enthaltend ein Aufnahmegehäuse (2, 3), eine erste Untersetzungseinheit (9a), welches ein Paar von hintereinander angeordneten Stirnrädern (9, 10) enthält, eine zweite Planetengetriebeeinheit (18), enthaltend Stirnräder (17, 40, 43), eine Bremse (15) mit Scheiben (14, 21), die zwischen dem Aufnahmegehäuse (2, 3) und der ersten Untersetzungseinheit (9a) angeordnet sind, ein Betätigungssystem (22, 23, 24, 25, 26, 27) für die Bremse (15), das durch das Gehäuse (2, 3) verläuft, wobei die Untersetzungseinheit **dadurch gekennzeichnet ist, dass** die Bremse (15) mit den Scheiben (14, 21) in axialer Richtung gedrückt wird und ihre Bremswirkung auf eins der Zahnräder (10) der ersten Untersetzungseinheit (9a) entwickelt, und das zwischen dem Zahnrad (10) selbst und dem Betätigungssystem (22, 23, 24, 25, 26, 27) der Bremse (15) das Zahnrad (10) die Aufgabe hat, dem Bremsdruck entgegen zu wirken.

2. Untersetzungsgetriebe mit eingebauter Bremse nach Patentanspruch 1, **dadurch gekennzeichnet, dass** das Betätigungssystem (22, 23, 24, 25, 26, 27) eine Schubstange (23) und einen Verdichtungsring (22) für eine erste Betätigungsweise enthält, wobei die Stange (23) durch das Gehäuse (2, 3) des Untersetzungsgetriebes (1) geht und an den Ring (22) und an einen ersten Steuerhebel (29) angeschlossen ist.

3. Untersetzungsgetriebe mit eingebauter Bremse nach Patentanspruch 2, **dadurch gekennzeichnet, dass** das Betätigungssystem (22, 23, 24, 25, 26, 27) der Bremse einen Trieb (25) für eine zweite Betätigungsweise enthält, beinhaltend einen Kolben (24), der durch eine unter Druck stehende Flüssigkeit betätigt wird und auf den Verdichtungsring (22) wirkt, und der getrennt von der Stange (23) für die erste Betätigungsweise ist und mit dieser im Flüssigkeitskontakt steht.

4. Untersetzungsgetriebe mit eingebauter Bremse nach Patentanspruch 3, **dadurch gekennzeichnet, dass** das Gehäuse des Untersetzungsgetriebes einen Deckel (3) enthält, und dadurch, dass der Trieb (25) im Inneren des Deckels (3) angeordnet ist und die Schubstange (23) koaxial zu dem und durch den Kolben (24) des Triebes (25) verläuft.

5. Untersetzungsgetriebe mit eingebauter Bremse nach Patentanspruch 3, **dadurch gekennzeichnet, dass** das Gehäuse des Untersetzungsgetriebes einen Deckel (3) enthält, und dadurch, dass der Trieb (25) ausserhalb des Deckels (3) angeordnet ist und über einen zweiten Hebel (37) auf die Schubstange (23) wirkt.

6. Untersetzungsgetriebe mit eingebauter Bremse nach einem beliebigen der vorstehenden Patentansprüche, **dadurch gekennzeichnet, dass** das Zahnrad (10) von einem Lager (39) getragen wird, welches dazu dient, nicht nur die radialen und axialen Kräfte aufzunehmen, die auf das Zahnrad (10) als Ergebnis der Antriebsübertragung ausgeübt werden, sondern auch die axialen Kräfte, die durch die Bremswirkung auf das Zahnrad (10) übertragen werden.

7. Untersetzungsgetriebe mit eingebauter Bremse nach Patentanspruch 6, **dadurch gekennzeichnet, dass** das Zahnrad (10) von einem Lager (39) getragen wird, das auf der entgegengesetzten Seite von jener angeordnet, auf welcher sich die Bremse (15) befindet, wobei das Lager (39) mit dem Gehäuse (2) auf solche Weise verbunden ist, dass es auf letzteres die axialen Kräfte überträgt, die als Ergebnis der Bremswirkung durch die Bremse (15) auf das Zahnrad (10) ausgeübt werden.

8. Untersetzungsgetriebe mit eingebauter Bremse nach einem beliebigen der vorstehenden Patentansprüche, **dadurch gekennzeichnet, dass** die erste Untersetzungseinheit (9a) ein Paar von Stirnrädern (9, 10) mit Schrägverzahnung enthält.

9. Untersetzungsgetriebe mit eingebauter Bremse nach einem beliebigen der vorstehenden Patentansprüche, **dadurch gekennzeichnet, dass** die zweite Planetengetriebeeinheit (18) ein Sonnenrad (17), zusammen mit dem Sonnenrad (17) wirkende Planetenräder (40) und ein Zahnrad mit Innenverzahnung (43) enthält, wobei die Planetenräder (40) drehbar auf Zapfen (42) montiert sind, welche wiederum an beiden Enden durch einen Planetenträger (41) gehalten werden, und wobei das Zahnrad mit Innenverzahnung (43) an dem Gehäuse (2) befestigt ist.

10. Untersetzungsgetriebe mit eingebauter Bremse nach Patentanspruch 9, **dadurch gekennzeichnet, dass** der Planetenträger (41) eine Welle (5) zur Antriebsübertragung auf das Antriebsrad eines Fahrzeugs enthält, das mit dem Untersetzungsgetriebe (1) versehen ist, und dadurch, dass die aus Planetenträger (41) und Welle (5) bestehende Gruppe von einem ersten Kugellager (44) zum Aufnehmen der axialen Belastungen getragen wird, sowie von einem zweiten Rollenlager (45), um die radialen Belastungen des Rades aufzunehmen.

## Revendications

1. Un réducteur avec frein intégré pour véhicules utilitaires, comprenant une boîte-contenant (2, 3), un premier groupe de réduction du mouvement (9a) comprenant une paire de roues dentées cylindriques (9, 10) placées l'une après l'autre, un deuxième groupe de réduction épicycloïdale (18) comprenant des roues dentées cylindriques (17, 40, 43), un frein (15) à disques (14, 21) placé entre la boîte-contenant (2, 3) et le premier groupe de réduction du mouvement (9a), un système d'actionnement (22, 23, 24, 25, 26, 27) pour le frein (15) passant à travers la boîte (2, 3), ledit réducteur étant **caractérisé en ce que** ledit frein (15) à disques (14, 21) est pressé axialement et développe son action de freinage sur une des roues dentées (10) du premier groupe de réduction (9a), et entre la roue dentée (10) elle-même et le système d'actionnement (22, 23, 24, 25, 26, 27) du frein (15), la roue dentée (10) étant destinée à s'opposer à la poussée de freinage.

2. Le réducteur avec frein intégré selon la revendication 1, **caractérisé en ce que** ledit système d'actionnement (22, 23, 24, 25, 26, 27) du frein comprend une tige de poussée (23) et une bague de compression (22) pour un premier mode d'actionnement, la tige (23) passant à travers la boîte (2, 3) du réducteur (1) et étant associée à la bague (22) et à un premier levier de commande (29).

3. Le réducteur avec frein intégré selon la revendication 2, **caractérisé en ce que** ledit système d'actionnement (22, 23, 24, 25, 26, 27) du frein comprend un actionneur (25) pour un deuxième mode d'actionnement, l'actionneur (25) comprenant un piston (24) mû par un fluide sous pression et agissant sur la bague de compression (22) et étant séparé de et en contact fluide avec la tige (23) pour le premier mode d'actionnement.

4. Le réducteur avec frein intégré selon la revendication 3, **caractérisé en ce que** la boîte de ce même réducteur comprend un couvercle (3) et **en ce que** ledit actionneur (25) est placé à l'intérieur du couvercle (3) et ladite tige de poussée (23) est coaxiale à et passe à travers le piston (24) de ce même actionneur (25).

5. Le réducteur avec frein intégré selon la revendication 3, **caractérisé en ce que** la boîte de ce même réducteur comprend un couvercle (3) et **en ce que** ledit actionneur (25) est placé à l'extérieur de ce couvercle (3) et agit sur la tige de poussée (23) par l'intermédiaire d'un deuxième levier (37).

6. Le réducteur avec frein intégré selon l'une quelconque des revendications précédentes, **caractérisé en ce que** ladite roue dentée (10) est supportée par un palier (39) qui est destiné à supporter aussi bien les forces radiales et axiales appliquées à la roue dentée (10) suite à la transmission du mouvement que les forces axiales appliquées à cette même roue dentée (10) suite à l'action de freinage.

7. Le réducteur avec frein intégré selon la revendication 6, **caractérisé en ce que** ladite roue dentée (10) est supportée par un palier (39) placé du côté opposé à celui où est placé le frein (15), le palier (39) étant relié avec la boîte (2) de manière à transférer à cette dernière les forces axiales appliquées à la roue dentée (10) suite à l'action de freinage du frein (15).

8. Le réducteur avec frein intégré selon l'une quelconque des revendications précédentes, **caractérisé en ce que** ledit premier groupe de réduction du mouvement (9a) comprend une paire de roues dentées cylindriques (9, 10) à denture hélicoïdale.

9. Le réducteur avec frein intégré selon l'une quelconque des revendications précédentes, **caractérisé en ce que** ledit deuxième groupe de réduction épicycloïdale (18) comprend une roue solaire (17), des satellites (40) coopérant avec cette même roue solaire (17) et une couronne (43) à denture interne, les satellites (40) étant montés de manière rotative sur des pivots (42) qui sont à leur tour supportés aux deux extrémités par un porte-satellites (41), la couronne (43) étant fixée à la boîte (2).

10. Le réducteur avec frein intégré selon la revendication 9, **caractérisé en ce que** ledit porte-satellites (41) comprend un arbre (5) de transmission du mouvement pour une roue motrice d'un véhicule équipé du réducteur (1) et **en ce que** l'ensemble porte-satellite (41) et arbre (5) est supporté par un premier palier à billes (44) pour supporter des charges axiales et par un deuxième palier à rouleaux (45) pour supporter les charges radiales de la roue.
